# EUROPEAN PATENT SPECIFICATION

(11) **EP 2 100 674 B1**
(45) Date of publication and mention of the grant of the patent: **22.06.2011**
(21) Application number: 08173080.6
(22) Date of filing: 30.12.2008
(51) Int. Cl.: B21C 37/08

(54) **Machine and method for laminating the weld bead of a continuously welded pipe, comprising a mandrel controlled by electromagnetic means**
Vorrichtung und Verfahren zum Walzen der Schweissnaht eines durchgehend geschweißten Rohrs, mit durch elektromagnetische Mittel gesteuertem Dorn
Machine et procédé de laminage du cordon de soudure d'un tuyau soudé en continu, comprenant un mandrin contrôlé par des moyens électromagnétiques

(30) Priority: 10.03.2008 IT MI20080406
(43) Date of publication of application: 16.09.2009
(73) Proprietor: Olimpia 80 SRL, 27020 Borgo San Siro PV (IT)
(72) Inventor: Travini, Vittorio, 27020 BORGO SAN SIRO (PAVIA) (IT)
(74) Representative: Petruzziello, Aldo

(56) References cited:
- WO-A-2009/050559

## Description

The present invention refers to a laminating machine and method for the weld beam of a continuously welded pipe, in which the mandrel is controlled by electromagnetic means comprising at least one core of ferromagnetic material placed inside the welded pipe and subject to the magnetic field generated by at least one fixed electromagnetic coil placed outside the laminating machine.

Known to the art are laminating machines for the weld beam of a continuously welded pipe in which the weld beam is laminated between a roller acting on the outer wall of the welded pipe and a mandrel (the outside diameter of which is little less than the inside diameter of the pipe) placed inside the welded pipe, level with the above mentioned roller.

The laminating machines of the prior art and the operation thereof will not be further described because they are per se known; it will be recalled only that the mandrel is (or tends to be) drawn by the moving welded pipe and must therefore be fixed to means (typically a rod or a cable) that hold it in (or return it to) the working position, namely level with the above mentioned roller.

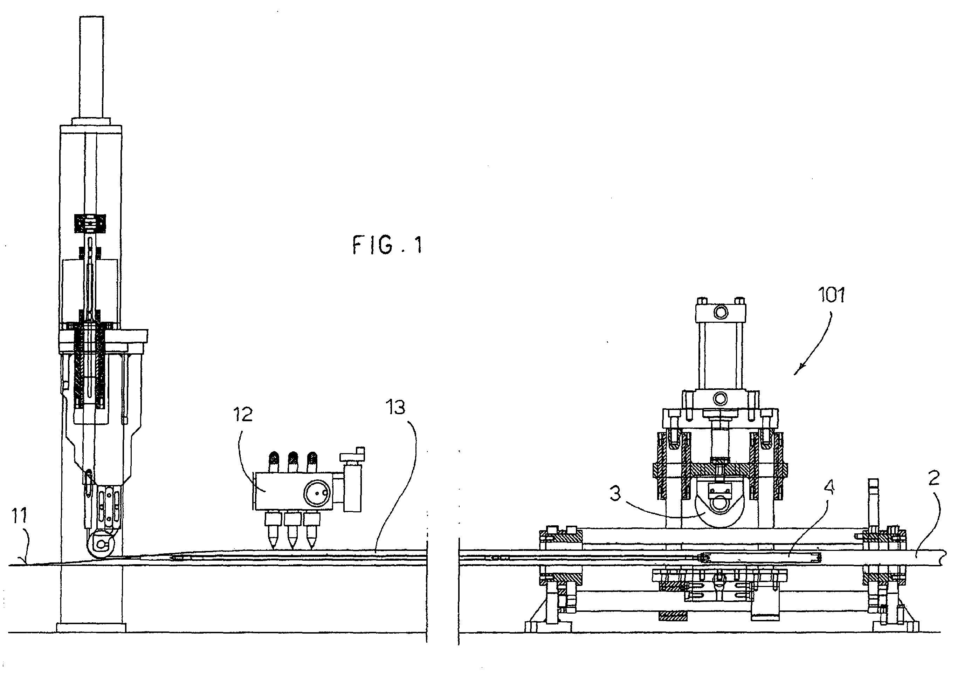

A production line for welded pipes, comprising a laminating machine 101 of the prior art, is illustrated very schematically in Figure 1, which shows the sheet metal 11 which is bent until the two edges meet (and are welded by welding means 12 to form the welded pipe), the welded pipe 2, the roller 3 acting on the outer wall of the pipe 2 and the mandrel 4 connected to the cable 13.

For simplicity of the graphic representation, the shaping means which bend the sheet metal 11 until the two edges meet and the means for finishing and cutting the welded pipe 2 have been omitted in Figure 1 because they are per se known and outside the scope of the invention.

Laminating machines of the prior art have numerous limitations and/or drawbacks, the most important of which is the fact that the cable 13 (or the rod) must pass beneath the welding means 12, where it undergoes a strong overheating which damages it, causing breakage thereof in a more or less short time.

This drawback is particularly significant if laser welding means are used, since the laser beam passes through the sheet metal 11 and penetrates the cable 13, damaging it.

Attempts to solve the problem by means of cooling systems based on the closed circuit circulation of a liquid (water or another functionally equivalent liquid) have not yielded any useful result.

From the prior art mentioned in WO 2009/050559 is known a machine for laminating the weld bead of a continuously welded pipe, comprising a roller pressed against the outer wall of the pipe, a mandrel positioned inside the pipe; a core of ferromagnetic material connected, by means of connecting means, to one end of the mandrel, the ferromagnetic core being placed inside the welded pipe to be subjected to the magnetic field generated by an electromagnetic coil positioned "upstream" of the roller.

The electromagnetic coil is supported by a carriage movable, with respect to the laminating machine, with a reciprocating motion parallel to the advance direction of the welded pipe. The magnetic field generated by the electromagnetic coil fixes the supporting carriage to said core, which has therefore a reciprocating motion together with the supporting carriage.

Object of the present invention is to overcome the aforementioned limits and/or drawbacks of the laminating machines of the prior art; this object is reached by means of a laminating machine and method which presents the characterising features illustrated in claims 1 and 9; further advantageous characteristics of the invention form the subject matter of the dependent claims.

Further characteristics of the invention will be made clearer by the detailed description that follows, referring to purely exemplifying and therefore non limiting embodiments thereof, illustrated in the appended figures, wherein:
- Figure 1 shows schematically a production line for welded pipes comprising a laminating machine of the prior art;
- Figure 2 shows schematically the portion of the production line of Figure 1 comprising a laminating machine produced according to the invention;
- Figure 3 shows schematically another embodiment of a laminating machine produced according to the invention.

In the appended figures like elements will be designated by the same reference numerals.

The present invention refers to a laminating machine for the weld beam of a continuously welded pipe, in which one end of the mandrel is connected to electromagnetic means comprising a core of ferromagnetic material placed inside the welded pipe and subject to a magnetic field generated by a fixed electromagnetic coil, positioned "upstream" (that is, at the inlet) of the laminating machine; the core of ferromagnetic material is connected to the mandrel by rigid connecting means made of non-magnetic material.

As stated previously, Figure 1 shows schematically a production line for welded pipes comprising a laminating machine 101 of the prior art.

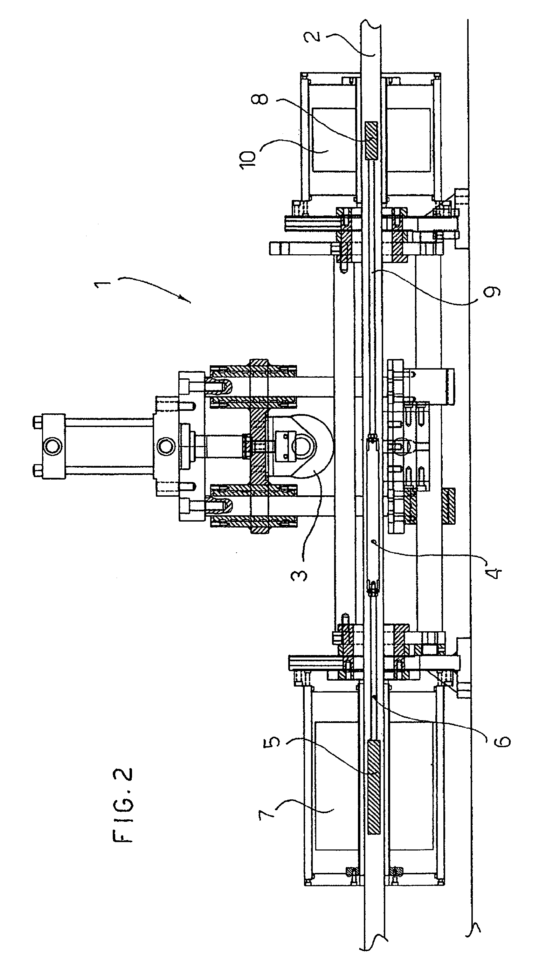

Figure 2 shows schematically the portion of the production line of Figure 1 comprising a laminating machine 1 produced according to the invention, which differs from the laminating machine 101 of Figure 1 essentially in that one end of its mandrel 4 is connected, by means of connecting means 6, to a core of ferromagnetic material 5, positioned inside the welded pipe 2 and subject to the magnetic field generated by a fixed electromagnetic coil 7 positioned "upstream" of the laminating machine 1.

The connecting means 6 are advantageously rigid and made of non-magnetic material so as not to create interference between the core 5, the mandrel 4 and the electromagnetic coil 7, and the fixed electromagnetic coil 7 surrounds the portion of welded pipe 2 containing the core 5 of ferromagnetic material to create a magnetic field that is uniform and, with the same electric current consumption, of greater intensity.

The fixed core 7, when it is activated, sucks inside it the ferromagnetic core 5 which, by means of the connecting means 6, recalls the mandrel 4, causing it to move in the opposite direction to the direction of travel of the pipe 2; in the embodiment illustrated in the figures, the pipe 2 moves from left to right whilst the mandrel 4 is drawn by the pipe from left to right when the coil 7 is not activated and moves from right to left when the coil 7 is activated.

In order to make the action of the coil 7 gentler and more gradual, in the embodiment illustrated in Figure 2 the other end of the mandrel 4 is connected, by means of further connecting means 9, to a further electromagnetic core 8, positioned inside the welded pipe 2 and immersed in the magnetic field generated by a further fixed electromagnetic core 10 positioned "downstream" (that is, at the outlet) of the laminating machine 1, which, when activated, exerts on the mandrel 4 an action in the opposite direction to that exerted by the coil 7 by means of the core 8 and of the connecting means 6.

The connecting means 9 are advantageously rigid and made of non-magnetic material and the fixed electromagnetic coil 10 surrounds the portion of welded pipe 2 containing the core of ferromagnetic material 8.

The ferromagnetic core 8, the connecting means 9 and the fixed electromagnetic coil 10 can be omitted without departing from the scope of the invention.

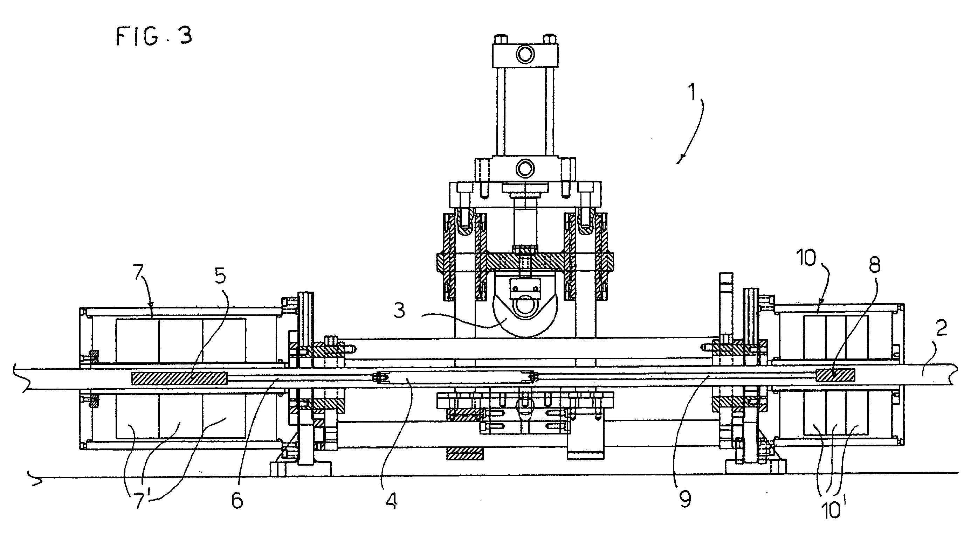

Figure 3 shows schematically another embodiment of a laminating machine 1 produced according to the invention, which differs from that shown in Figure 2 essentially in that, to make the movement of the mandrel smooth and gradual, at least the fixed coil 7 consists of a plurality of windings 7' (of three windings 7' in the embodiment of Figure 3) placed side by side, which can be supplied separately.

In Figure 3 the fixed coil 10 also is made up of a plurality of windings 10' (of three windings 10' in the embodiment of Figure 3) placed side by side and supplied separately but, without departing from the scope of the invention, the fixed coil 10, if present, can be made up of a single winding, as shown in Figure 2.

The intensity of the current that circulates in the coils 7 and 10 (if present) can be controlled and regulated by means of electronic circuits which are omitted from the present description because they can easily be realised by a person skilled in the art and are any case outside the scope of the present invention.

## Claims

1. A machine (1) for laminating the weld bead of a continuously welded pipe (2), comprising:
- a roller (3) pressed against the outer wall of the pipe (2);
- a mandrel (4) positioned inside the pipe (2);
- an electromagnetic coil (7) positioned "upstream" of the roller (3);
- a core of ferromagnetic material (5) to which one end of the mandrel (4) is connected by means of connecting means (6), the ferromagnetic core (5) being placed inside the welded pipe (2) to be subjected to the magnetic field generated by said electromagnetic coil (7);
**characterised in that** said electromagnetic coil (7) is mounted in a fixed position on the laminating machine (1) and, when activated sucks inside it said ferromagnetic core (5).

2. A laminating machine (1) as in claim 1, **characterised in that** the connecting means (6) are rigid and are made of non-magnetic material.

3. A laminating machine (1) as in claim 1, **characterised in that** the fixed electromagnetic coil (7) surrounds the portion of the welded pipe (2) containing the core of ferromagnetic material (5).

4. A laminating machine (1) as in claim 1, **characterised in that** the fixed electromagnetic coil (7) consists of a plurality of windings (7'), placed side by side, which can be supplied separately.

5. A laminating machine (1) as in claim 1, **characterised in that** the other end of the mandrel (4) is connected, by means of further connecting means (9), to a further ferromagnetic core (8), positioned inside the welded pipe (2) and subject to the magnetic field generated by a further fixed electromagnetic coil (10) positioned "downstream" of the roller (3).

6. A laminating machine (1) as in claim 5, **characterised in that** the further connecting means (9) are rigid and are made of non-magnetic material.

7. A laminating machine (1) as in claim 5, **characterised in that** the further fixed electromagnetic coil (10) surrounds the portion of the welded pipe (2) containing the second core of ferromagnetic material (8).

8. A laminating machine (1) as in claim 5, **characterised in that** the further fixed electromagnetic coil (10) consists of a plurality of windings (10'), placed side by side, which can be supplied separately.

9. A method for laminating the weld bead of a continuously advancing welded pipe (2), by pressing a roller (3) against the outer wall of the pipe inside which a mandrel (4) is inserted, connected by means of connecting means (6) to a ferromagnetic core (5) placed inside the pipe and subjected to the magnetic field generated by an electromagnetic coil (7) placed upstream of the roller, **characterized in that** said electromagnetic coil is mounted in a fixed position on the laminating machine (1) and is activated for sucking inside it said ferromagnetic core (5).

10. Method according to claim 9, **characterized in that** said electromagnetic coil (7) consists of a plurality of windings, placed side by side, which are supplied separately to render the movement of the mandrel smooth and gradual.

11. Method according to claim 9 or 10, **characterized in that** the other end of the mandrel (4) is connected, by means of further connecting means (9), to a further ferromagnetic core (8), positioned inside the welded pipe (2) and subject to the magnetic field generated by a further fixed electromagnetic coil (10) positioned downstream of the roller (3), said electromagnetic coil (10) being activated for sucking inside it said ferromagnetic core (8).

12. Method according to claim 11, **characterized in that** said electromagnetic coil (10) consists of a plurality of windings, placed side by side, which are supplied separately to render the movement of the mandrel smooth and gradual.

## Patentansprüche

1. Vorrichtung (1) zum Walzen der Schweißnaht eines durchgehend geschweißten Rohres (2), umfassend:
- eine Walze (3), die an die Außenwand des Rohres (2) gedrückt wird;
- einen Dorn (4), der innerhalb des Rohres (2) angeordnet wird;
- eine elektromagnetische Spule (7), die der Walze (3) vorgelagert anordnet ist;
- einen Kern aus ferromagnetischem Material (5), mit dem ein Ende des Dornes (4) mittels Verbindungsmitteln (6) verbunden ist, wobei der ferromagnetische Kern (5) innerhalb des geschweißten Rohres (2) angeordnet wird, um dem Magnetfeld, welches durch die elektromagnetische Spule (7) erzeugt wird, ausgesetzt zu werden; **dadurch gekennzeichnet, dass** die elektromagnetische Spule (7) in einer festen Position an der Walzvorrichtung (1) angebracht ist und bei Aktivierung den ferromagnetischen Kern (5) in sich hinein zieht.

2. Walzvorrichtung (1) nach Anspruch 1, **dadurch gekennzeichnet, dass** die Verbindungsmittel (6) starr und aus nichtmagnetischem Material hergestellt sind.

3. Walzvorrichtung (1) nach Anspruch 1, **dadurch gekennzeichnet, dass** die feste elektromagnetische Spule (7) den Abschnitt des geschweißten Rohres (2), welcher den Kern aus ferromagnetischem Material (5) enthält, umgibt.

4. Walzvorrichtung (1) nach Anspruch 1, **dadurch gekennzeichnet, dass** die feste elektromagnetische Spule (7) aus mehreren Wicklungen (7') besteht, die Seite an Seite angeordnet sind und getrennt gespeist werden können.

5. Walzvorrichtung (1) nach Anspruch 1, **dadurch gekennzeichnet, dass** das andere Ende des Domes (4) mittels weiterer Verbindungsmittel (9) mit einem weiteren ferromagnetischen Kern (8) verbunden ist, der innerhalb des geschweißten Rohres (2) angeordnet ist und dem Magnetfeld ausgesetzt wird, welches durch eine weitere feste elektromagnetische Spule (10), die der Walze (3) nachgelagert angeordnet ist, erzeugt wird.

6. Walzvorrichtung (1) nach Anspruch 5, **dadurch gekennzeichnet, dass** die weiteren Verbindungsmittel (9) starr und aus nichtmagnetischem Material hergestellt sind.

7. Walzvorrichtung (1) nach Anspruch 5, **dadurch gekennzeichnet, dass** die weitere feste elektromagnetische Spule (10) den Abschnitt des geschweißten Rohrs (2), welcher den zweiten Kern aus ferromagnetischem Material (8) enthält, umgibt.

8. Walzvorrichtung (1) nach Anspruch 5, **dadurch gekennzeichnet, dass** die weitere feste elektromagnetische Spule (10) aus mehreren Wicklungen (10') besteht, die Seite an Seite angeordnet sind und getrennt gespeist werden können.

9. Verfahren zum Walzen der Schweißnaht eines sich kontinuierlich vorbewegenden geschweißten Rohrs (2) durch Drücken einer Walze (3) an die Außenwand des Rohres, in welches ein Dorn (4) eingeführt wird, der mittels Verbindungsmitteln (6) mit einem ferromagnetischen Kern (5) verbunden ist, welcher innerhalb des Rohres angeordnet und dem Magnetfeld ausgesetzt wird, das durch eine elektromagnetische Spule (7), die der Walze vorgelagert angeordnet ist, erzeugt wird, **dadurch gekennzeichnet, dass** die elektromagnetische Spule in einer festen Position an der Walzvorrichtung (1) angeordnet wird und aktiviert wird, um den ferromagnetischen Kern (5) in sich hinein zu ziehen.

10. Verfahren nach Anspruch 9, **dadurch gekennzeichnet, dass** die elektromagnetische Spule (7) aus mehreren Wicklungen besteht, die Seite an Seite angeordnet sind und getrennt gespeist werden, um die Bewegung des Dorns flüssig und allmählich zu gestalten.

11. Verfahren nach Anspruch 9 oder 10, **dadurch gekennzeichnet, dass** das andere Ende des Dorns (4) mittels weiterer Verbindungsmittel (9) mit einem weiteren ferromagnetischen Kern (8) verbunden ist, der innerhalb des geschweißten Rohres (2) angeordnet und dem Magnetfeld ausgesetzt wird, welches durch eine weitere ferromagnetische Spule (10), die der Walze (3) nachgelagert angeordnet ist, erzeugt wird, wobei die elektromagnetische Spule (10) aktiviert wird, um den ferromagnetischen Kern (8) in sich hinein zu ziehen.

12. Verfahren nach Anspruch 11, **dadurch gekennzeichnet, dass** die elektromagnetische Spule (10) aus mehreren Wicklungen besteht, die Seite an Seite angeordnet sind und getrennt gespeist werden, um die Bewegung des Dorns flüssig und allmählich zu gestalten.

## Revendications

1. Machine (1) destinée à laminer le cordon de soudure d'un tuyau soudé en continu (2), comprenant :
- un rouleau (3) appuyé contre la paroi extérieure du tuyau (2) ;
- un mandrin (4) positionné à l'intérieur du tuyau (2) ;
- une bobine électromagnétique (7) positionnée « en amont » du rouleau (3)
- un noyau de matériau ferromagnétique (5) auquel une extrémité du mandrin (4) est reliée au moyen d'un moyen de connexion (6), le noyau ferromagnétique (5) étant placé à l'intérieur du tuyau soudé (2) pour être soumis au champ magnétique généré par ladite bobine électromagnétique (7) ;
**caractérisé en ce que** ladite bobine électromagnétique (7) est montée dans une position fixe sur la machine à laminer (1) et lorsqu'elle est activée, aspire à l'intérieur de celle-ci ledit noyau ferromagnétique (5).

2. Machine à laminer (1) selon la revendication 1, **caractérisée en ce que** le moyen de connexion (6) est rigide et est fabriqué dans un matériau non-magnétique.

3. Machine à laminer (1) selon la revendication 1, **caractérisée en ce que** la bobine électromagnétique fixe (7) entoure la partie du tuyau soudé (2) contenant le noyau de matériau ferromagnétique (5).

4. Machine à laminer (1) selon la revendication 1, **caractérisée en ce que** la bobine électromagnétique fixe (7) consiste en une pluralité d'enroulements (7') placés côte à côte qui peuvent être alimentés séparément.

5. Machine à laminer (1) selon la revendication 1, **caractérisée en ce que** l'autre extrémité du mandrin (4) est reliée, au moyen d'un moyen de connexion supplémentaire (9), à un noyau ferromagnétique supplémentaire (8), positionné à l'intérieur du tuyau soudé (2) et soumis au champ magnétique généré par une bobine électromagnétique fixe (10) supplémentaire positionnée « en aval » du rouleau (3).

6. Machine à laminer (1) selon la revendication 5, **caractérisée en ce que** le moyen de connexion supplémentaire (9) est rigide et est fabriqué dans un matériau non-magnétique.

7. Machine à laminer (1) selon la revendication 5, **caractérisée en ce que** la bobine électromagnétique fixe (10) supplémentaire entoure la partie du tuyau soudé (2) contenant le second noyau de matériau ferromagnétique (8).

8. Machine à laminer (1) selon la revendication 5, **caractérisée en ce que** la bobine électromagnétique fixe (10) supplémentaire consiste en une pluralité d'enroulements (10') placés côte à côte qui peuvent être alimentés séparément.

9. Procédé de laminage du cordon de soudure d'un tuyau soudé avançant en continu (2), en appuyant un rouleau (3) contre la paroi extérieure du tuyau à l'intérieur duquel un mandrin (4) est inséré, relié au moyen d'un moyen de connexion (6) à un noyau ferromagnétique (5) placé à l'intérieur du tuyau et soumis au champ magnétique généré par une bobine électromagnétique (7) placée en amont du rouleau,
**caractérisé en ce que** ladite bobine électromagnétique est montée dans une position fixe sur la machine à laminer (1) et est activée pour aspirer à l'intérieur de celle-ci ledit noyau ferromagnétique (5).

10. Procédé selon la revendication 9, **caractérisé en ce que** ladite bobine électromagnétique (7) consiste en une pluralité d'enroulements placés côte à côte qui sont alimentés séparément pour rendre le mouvement du mandrin doux et gradué.

11. Procédé selon la revendication 9 ou 10, **caractérisé en ce que** l'autre extrémité du mandrin (4) est reliée, au moyen d'un moyen de connexion supplémentaire (9), à un noyau ferromagnétique supplémentaire (8), positionné à l'intérieur du tuyau soudé (2) et soumis au champ magnétique généré par une bobine électromagnétique fixe (10) supplémentaire positionnée en aval du rouleau (3), ladite bobine électromagnétique fixe (10) étant activée pour aspirer à l'intérieur de celle-ci ledit noyau ferromagnétique (8).

12. Procédé selon la revendication 11, **caractérisé en ce que** ladite bobine électromagnétique (10) consiste en une pluralité d'enroulements placés côte à côte, qui sont alimentés séparément pour rendre le mouvement du mandrin doux et gradué.
